# EUROPEAN PATENT APPLICATION

(11) **EP 3 748 579 A1**
(43) Date of publication of application: **09.12.2020**
(21) Application number: 18903634.6
(22) Date of filing: 08.02.2018
(51) Int. Cl.: G06T 7/11, G06T 7/13, G06T 7/73, G06T 5/50, G06T 5/00, B25J 19/02, B25J 19/04, B25J 9/16

(54) **OBJECT DETECTION METHOD AND ROBOT SYSTEM**

(30) Priority: 30.01.2018 KR 20180011359
(71) Applicant: Hanwha Precision Machinery Co., Ltd., Changwon-si, Gyeongsangnam-do 51552 (KR)
(72) Inventor: JUNG, Dong Whan, Changwon-si Gyeongsangnam-do 51542 (KR); JANG, Jae Ho, Changwon-si Gyeongsangnam-do 51542 (KR); HONG, Ha Na, Changwon-si Gyeongsangnam-do 51542 (KR)
(74) Representative: Gulde & Partner
(86) International application number: PCT/KR2018/001688
(87) International publication number: WO 2019/151555

(57) **Abstract**

An object detection method according to the present embodiment comprises steps (a1) to (b3). In step (a1), a control device obtains an extracted image and an outline of a specific object from a captured image of the specific object. In step (a2), the control device obtains reference position information, which is information on the angle and the distance of each point of the outline, with respect to the center position of the specific object, from the extracted image of the specific object. In step (b), the control device detects the outline of an unknown object from a captured image of the unknown object. In step (b2), the control device obtains patch images including a region of the outline of the unknown object, by means of the reference position information. In step (b3), the control device determines whether an image of the specific object exists in the captured image of the unknown object, by means of the similarity of the shape of the outline of the unknown object with respect to the shape of the outline of the specific object and of the similarity of each of the patch images with respect to the extracted image of the specific object.

## Description

### TECHNICAL FIELD

The present disclosure relates to an object detection method and a robot system, and more particularly, to an object detection method, whereby a control device of a robot determines whether an image of a specific object exists in a captured image of an unknown object from a camera of the robot, and a robot system employing the object detection method.

### BACKGROUND ART

General robots, such as collaborative robots, have an arm and a wrist and work by driving a working tool coupled to the wrist. To this end, a tool-flange for screwing the working tool at an end of the wrist is formed. A camera for object detection is installed at the middle position of the tool-flange. In the case of mobile robots, robots mounted on an unmanned ground vehicle may work while moving between various worktables.

Control devices of the robots determine whether an image of a specific object exists in a captured image of an unknown object from a camera of the robot. In robot systems according to the related art, a template matching method or point matching method is employed as an object detection method.

In the template matching method, in order to search an image matching a template image of the specific object, image comparison is performed in all regions of a screen. Thus, since a comparison-search time becomes longer, an object detection time may become longer. Thus, an expensive control device having a high processing speed is required. Also, the accuracy of detection is remarkably deteriorated depending on changes in ambient illuminance and a material of a specific object.

In the point matching method, such as a speeded up robust features (SURF) method or a scale-invariant feature transform (SIFT) method, feature points matching feature points that may represent the specific object are searched. According to this point matching method, feature points which are robust to changes in the size of an object, rotation of an object, and changes in ambient illuminance need to be extracted. Thus, since an image processing time becomes longer, an object detection time may become longer. Thus, an expensive control device having a high processing speed is required.

Problems of the background art are possessed by the inventor so as to derive the present disclosure or are the content acquired in the derivation process of the present disclosure and are not necessarily known to the general public before filing the present disclosure.

### DESCRIPTION OF EMBODIMENTS

### TECHNICAL PROBLEM

Provided are an object detection method, whereby an object detection time may be effectively reduced, the accuracy of object detection may be increased and the object detection may be robust to changes in ambient illuminance and a material of a specific object, and a robot system.

### SOLUTION TO PROBLEM

According to an aspect of the present disclosure, an object detection method, whereby a control device of a robot may determine whether an image of a specific object exists in a captured image of an unknown object from a camera of the robot, includes (a1) to (b3).

In (a1), the control device may obtain an extracted image and an outline of a specific object from the captured image of the specific object.

In (a2), the control device may obtain reference position information, which is information on the angle and the distance of each point of the outline with respect to the center position of the specific object, from the extracted image of the specific object.

In (b1), the control device may detect the outline of the unknown object from the captured image of the unknown object.

In (b2), the control device may obtain patch images including a region of the outline of the unknown object, by means of the reference position information.

In (b3), the control device may determine whether an image of the specific object exists in the captured image of the unknown object, by means of the similarity of the shape of the outline of the unknown object with respect to the shape of the outline of the specific object and of the similarity of each of the patch images with respect to the extracted image of the specific object.

In a robot system according to an embodiment of the present disclosure, the control device of the robot may determine whether an image of a specific object exists in a captured image of an unknown object from a camera of the robot. Here, the control device of the robot may employ the object detection method.

### ADVANTAGEOUS EFFECTS OF DISCLOSURE

In an object detection method according to the present embodiment and a robot system employing the same, it is determined whether an image of a specific object exists in a captured image of an unknown object, by means of first similarity that is the similarity of the shape of an outline of the unknown object with respect to the shape of an outline of the specific object and second similarity that is the similarity of each of patch images with respect to the extracted image of the specific object. Thus, the following effects may be obtained.

Firstly, the first similarity that is the similarity of the shape of the outline may be obtained by well-known shape descriptors, for example, Fourier descriptors. Thus, the first similarity may be obtained for a relatively short time and may be robust to changes in ambient illuminance and a material of the specific object.

Secondly, since the first similarity that is the similarity of the shape of the outline and the second similarity that may be referred to as the similarity inside an object, are applied together to determination criteria, the accuracy of object detection may be increased, and the object detection may be robust to changes in ambient illuminance and a material of the specific object.

Thirdly, since patch images including a region of the outline of the unknown object are obtained by means of the reference position information on the specific object, the number of the patch images may be minimized. Thus, the second similarity may be obtained for a relatively short time.

In conclusion, in the object detection method according to the present embodiment and a robot system employing the same, an object detection time may be effectively reduced, the accuracy of object detection may be increased, and the object detection may be robust to changes in ambient illuminance and a material of the specific object.

### BRIEF DESCRIPTION OF DRAWINGS

FIG. 1 is a view showing a robot system employing an object detection method according to an embodiment of the present disclosure.
FIG. 2 is a side view for explaining a peripheral structure of the wrist of a robot in FIG. 1.
FIG. 3 is a flowchart illustrating a process in which a control device of FIG. 1 performs a registration mode (a) for object detection.
FIG. 4 is a flowchart illustrating a detailed operation of Operation S301 in FIG. 3.
FIG. 5 is a view for explaining a difference image in Operation S403 of FIG. 4 as an example.
FIG. 6 is a view illustrating an extracted image of a specific object obtained from the difference image of FIG. 5.
FIG. 7 is a view illustrating an outline of the specific object detected by Operation S409 of FIG. 4.
FIG. 8 is a flowchart illustrating a process in which the control device of FIG. 1 performs an object detection mode (b).
FIG. 9 is a flowchart illustrating a detailed operation of Operation S801 in FIG. 8.
FIG. 10 is a view illustrating an outline of an unknown object detected by Operation S801 of FIG. 8.
FIGS. 11 through 14 are views illustrating patch images obtained by Operation S805 of FIG. 8.
FIG. 15 is a flowchart illustrating a detailed operation of Operation S807 in FIG. 8.
FIG. 16 is a flowchart illustrating a detailed operation of Operation S1505 in FIG. 15.
FIG. 17 is a view illustrating an example of the similarity of each of patch images of FIGS. 11 through 14 with respect to the extracted image of FIG. 6.
FIG. 18 is a view illustrating a patch image searched by Operation S1605 of FIG. 16.

### BEST MODE

The following description and the accompanying drawings are intended to understand an operation according to the present disclosure, and a part that can be easily implemented by a typical descriptor in the art is omittable.

In addition, the present specification and drawings are not provided for the purpose of limiting the present disclosure, and the scope of the present disclosure should be defined by the claims. The terms herein should be interpreted as meanings and concepts which are consistent with the technical spirit of the present disclosure in order to best represent the present disclosure.

Hereinafter, embodiments of the present disclosure will be described with reference to the accompanying drawings.

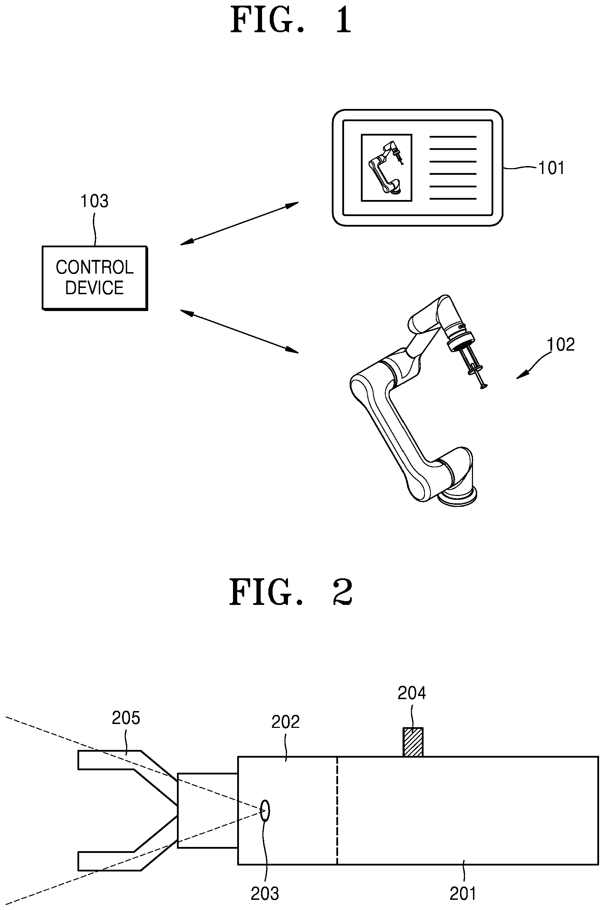

FIG. 1 shows a robot system employing an object detection method according to an embodiment of the present disclosure.

Referring to FIG. 1, the robot system according to the present embodiment includes a robot 102, a control device 103, and a teaching pendant 101.

The control device 103 may control an operation of the robot 102. The teaching pendant 101 may generate user input signals according to user's manipulation so as to input the user input signals to the control device 103.

Each of joints of the robot 102 according to the present embodiment may include a force/torque sensor, three-dimensional (3D) driving shafts, motors for rotating the 3D driving shafts, and encoders for transmitting angle data of the 3D driving shafts to the control device.

FIG. 2 is a side view for explaining a peripheral structure of a wrist of the robot 102 in FIG. 1.

Referring to FIG. 2, the robot 102 may include an arm (not shown) and a wrist 201 and may work by driving a working tool 205 coupled to the wrist 201. To this end, a tool-flange 202 for coupling the working tool 205 at an end of the wrist 201 may be formed, and a working tool 205 may be screwed to the tool-flange 202. A camera 203 for object detection may be installed at the middle position of the tool-flange 202.

A tool-communication terminal (not shown) and a tool-control terminal 204 may be installed at the wrist 201. Each of the tool-communication terminal 402a and the tool-control terminal 204 may be connected to a working tool 205 via a cable (not shown).

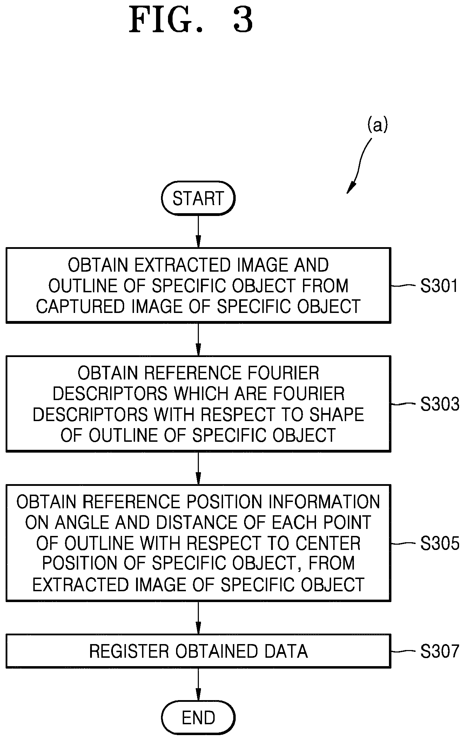

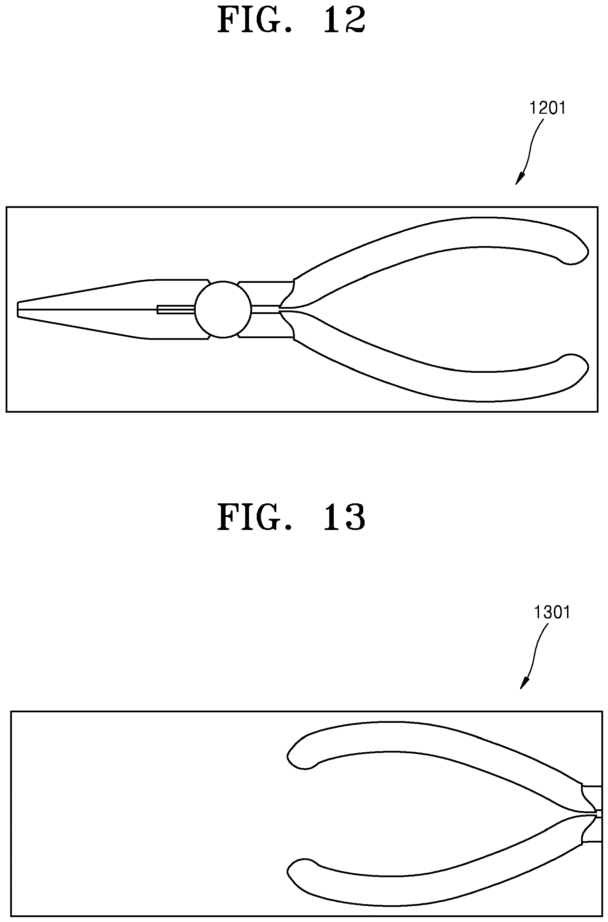

The control device (see 103 of FIG. 1) may ethernet-communicate with the working tool 205 via a tool-communication terminal (not shown) and may control the operation of the working tool 205 via the tool-control terminal 204. To this end, the control device 103 may determine whether an image of a specific object exists in a captured image of an unknown object from the camera 203 of the robot 102. Content related to this will be described in detail with reference to FIGS. 3 through 18.

FIG. 3 shows a process in which the control device 103 in FIG. 1 performs a registration mode (a) for object detection.

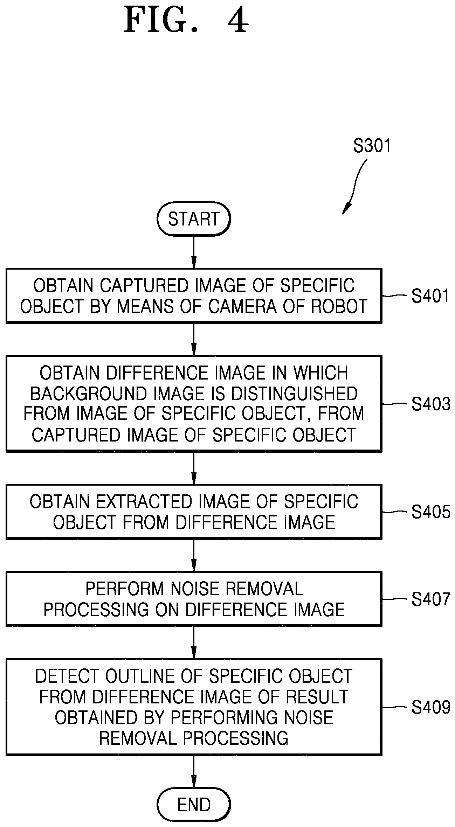

FIG. 4 shows a detailed operation of Operation S301 in FIG. 3.

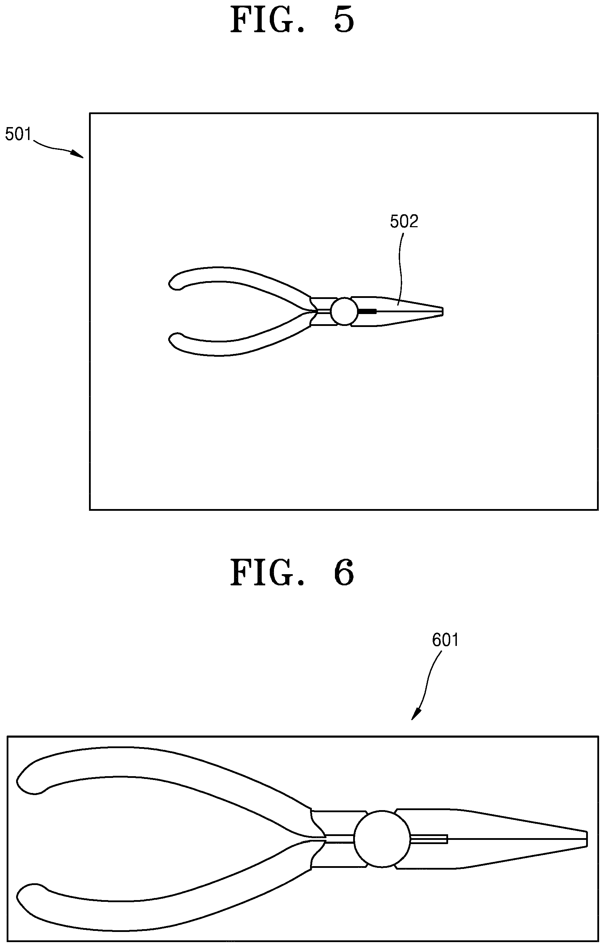

FIG. 5 is a view for explaining a difference image in Operation S403 in FIG. 4 as an example. In FIG. 5, reference numerals 501 and 502 represent a difference image and an image of a specific object, respectively.

FIG. 6 is a view showing an extracted image 601 of the specific object obtained from the difference image 501 of FIG. 5.

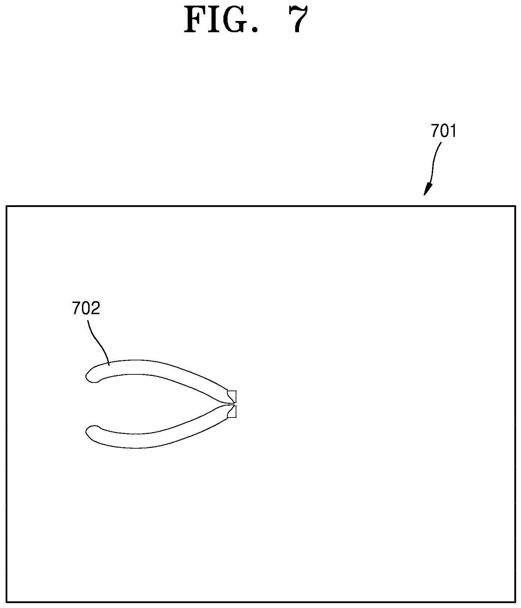

FIG. 7 is a view showing an outline of the specific object detected by Operation S409 of FIG. 4. In FIG. 7, reference numerals 701 and 702 represent an outline detection screen and an outline of the specific object, respectively.

A process in which the control device 103 performs the registration mode (a) for object detection, will be described in detail with reference to FIGS. 3 through 7. The registration mode (a) may be performed according to user input signals from the teaching pendant (see 101 in FIG. 1).

In Operation S301, the control device 103 may obtain the extracted image 601 and the outline 702 of the specific object from a captured image of the specific object. Operation S301 may include Operations S401 through S409.

In Operation S401, the control device 103 may obtain a captured image of the specific object by means of the camera (see 203 of FIG. 2) of the robot. That is, the control device 103 may obtain a captured image by capturing the specific object according to user command signals.

Next, the control device 103 may obtain the difference image 501 in which the image 502 of the specific object is distinguished from a background image, from the captured image of the specific object in Operation S403. A detailed method of obtaining the difference image 501 is well-known.

Next, the control device 103 may obtain the extracted image 601 of the specific object from the difference image 501 in Operation S405.

Next, the control device 103 may perform noise removal processing on the difference image 501 in Operation S407. In Operation S407, shadow removal processing may be additionally performed. An image of a shadow may be generated according to ambient illuminance. Noise removal processing and shadow removal processing may be performed by using known image processing techniques.

The control device 103 may detect the outline 702 of the specific object from a difference image of a result obtained by performing noise removal processing in Operation S409. Here, although the outline 702 of the specific object may be detected only partially, but not all (see FIG. 7), the outline 702 of the specific object may be used later as a comparison object. An outline of an unknown object may also be detected only partially, but not all.

When the execution of Operation S301 is completed as described above, the control device 103 may obtain reference Fourier descriptors which are Fourier descriptors for the shape of the outline 702 of the specific object in Operation S303.

For reference, known shape descriptors (Fourier descriptors), in addition to Fourier descriptors, may include curvature scale space descriptors (CSSD), radial angular transform descriptors (RATD), Zernike moment descriptors (ZMD), and radial Tchebichef moment descriptors (RTMD). Here, Fourier descriptors may have relatively high accuracy with respect to the shape of the outline 702.

When the shape descriptors are not used, Operation S303 described above is omittable. However, the shape descriptors used in the present embodiment have an advantage of not being greatly affected by deformation, rotation, and size change of a target object.

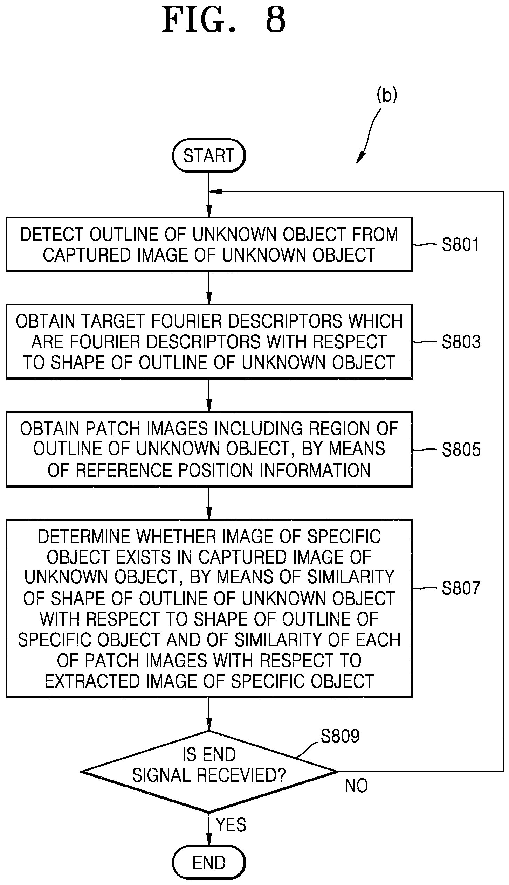

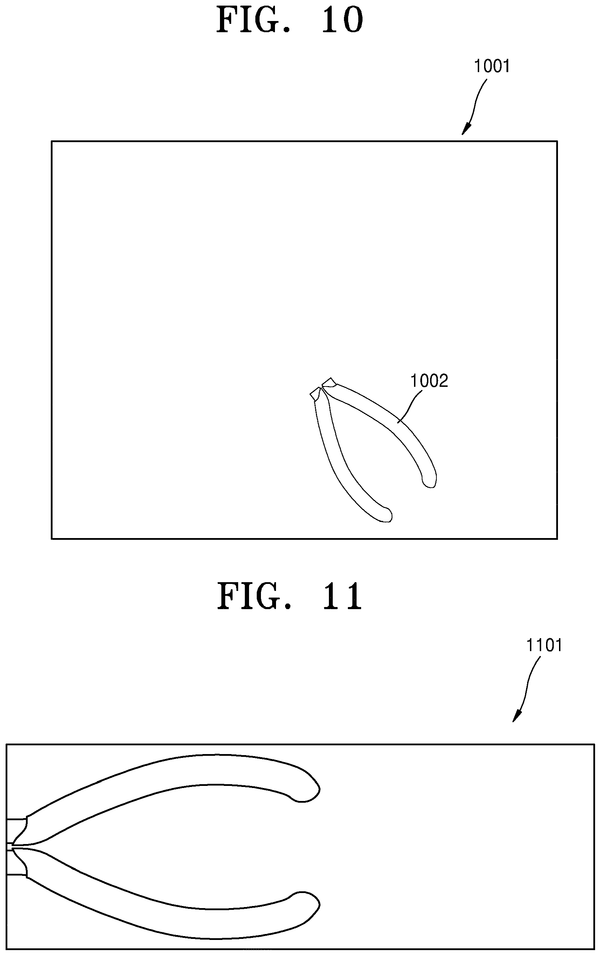

Next, the control device 103 may obtain reference position information, which is information on the angle and the distance of each point of the outline 702 with respect to the center position of the specific object, from the extracted image 601 of the specific object in Operation S305. The outline 702 of the specific object and the outline (see 1002 of FIG. 10) of an unknown object may be detected only partially, but not all. Thus, the reference position information obtained in Operation S305 may be used to obtain patch images from an object detection mode (see Operation (b) of FIG. 8).

Last, the control device 103 may register data obtained in Operations S301 and S305 described above in Operation S307. More specifically, information on the extracted image 601 of the specific object and the outline 702 of the specific object obtained in Operation S301, Fourier descriptors obtained in Operation S303, and the reference position information obtained in Operation S305 may be stored.

FIG. 8 shows a process in which the control device 103 of FIG. 1 performs the object detection mode (b).

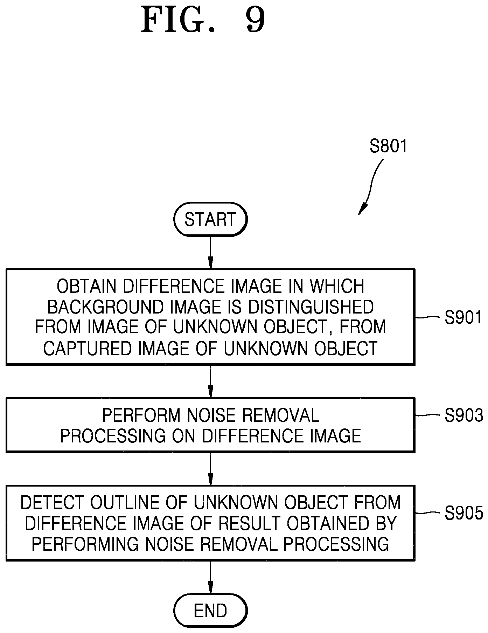

FIG. 9 shows a detailed operation of Operation S801 in FIG. 8.

FIG. 10 shows an outline 1002 of an unknown object detected by Operation S801 of FIG. 8. In FIG. 10, reference numeral 1001 represents an outline detection screen.

FIGS. 11 through 14 are views showing patch images 1101 through 1401 obtained by Operation S805 of FIG. 8.

A process in which the control device 103 performs an object detection mode (b), will be described in detail with reference to FIGS. 8 through 14. The object detection mode (b) may be performed sequentially regardless of the user input signals.

In Operation S801, the control device 103 may detect an outline of an unknown object from a captured image of the unknown object. Operation S801 may include Operations S901 through S905.

In Operation S901, the control device 103 may obtain a difference image in which an image of the unknown object is distinguished from the background image, from the captured image of the unknown object. Here, an algorithm for obtaining the difference image in Operation S403 of FIG. 4 is equally applied.

Next, the control device 103 may perform noise removal processing with respect to the difference image 501 in Operation S903. Here, an algorithm for performing noise removal processing in Operation S407 of FIG. 4 is equally applied.

The control device 103 may detect the outline 1002 of the unknown object from a difference image of a result obtained by performing noise removal processing in Operation S905. Here, an algorithm for detecting the outline 1002 in Operation S409 of FIG. 4 is equally applied. As described above, the outline 702 of the specific object and the outline 1002 of the unknown object are likely not to be completely detected. The present disclosure is made while recognizing these problems.

When the execution of Operation S905 is completed as described above, the control device 103 may obtain target Fourier descriptors which are Fourier descriptors with respect to the shape of the outline 1002 of the unknown object in Operation S803. Here, an algorithm of Operation S303 of FIG. 3 is equally applied. The Fourier descriptors have been sufficiently described in Operation S303 of FIG. 3.

Next, the control device 103 may obtain the patch images 1101 to 1401 including a region of the outline of the unknown object, by means of the reference position information in Operation S805. Here, the reference position information are information obtained in Operation S305 of FIG. 3. Since the patch images 1101 to 1401 are obtained by means of the reference position information, the number of the patch images may be minimized. Even when four patch images 1101 to 1401 are used as in the present embodiment, the accuracy of object detection may be increased.

The patch images 1101 to 1401 obtained in Operation S805 may include at least one image 1101 and 1201 extracted from the captured image of the unknown object and at least one image 1101 and 1201 of a result obtained by rotation-moving the at least one extracted image. In the case of the present embodiment, two patch images 1101 and 1201 may be extracted from the captured image of the unknown image, and two patch images 1301 and 1401 of a result obtained by rotating the two extracted patch images 1101 and 1201 by 180 degrees.

The control device 103 may determine whether an image of the specific object exists in the captured image of the unknown object, by means of the similarity of the shape of the outline 1002 of the unknown object with respect to the shape of the outline (see 702 of FIG. 7) of the specific object and the similarity of each of the patch images 1101 to 1401 with respect to the extracted image (see 601 of FIG. 6) of the specific object in Operation S807. Thus, the following effects may be obtained.

Firstly, the first similarity that is the similarity of the shape of the outline may be obtained by well-known shape descriptors, for example, Fourier descriptors. Thus, the first similarity may be obtained for a relatively short time, and the object detection may be robust to changes in ambient illuminance and a material of the specific object.

Secondly, since the first similarity that is the similarity of the shape of the outline and the second similarity that may be referred to as the similarity inside an object, are applied together to determination criteria, the accuracy of object detection is increased, and the object detection may be robust to changes in ambient illuminance and a material of the specific object.

Thirdly, since patch images 1101 to 1401 including a region of the outline of the unknown object are obtained by means of the reference position information on the specific object, the number of the patch images may be minimized. Thus, the second similarity may be obtained for a relatively short time.

The above-described Operations S801 to S807 may be repeatedly performed until an end signal is generated in Operation S809.

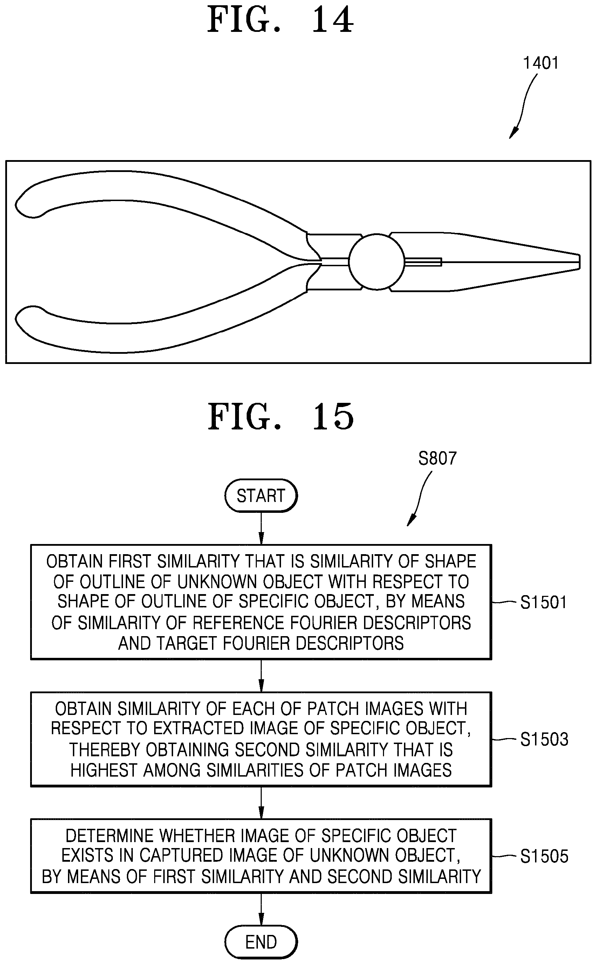

FIG. 15 shows a detailed operation of determination Operation S807 in FIG. 8.

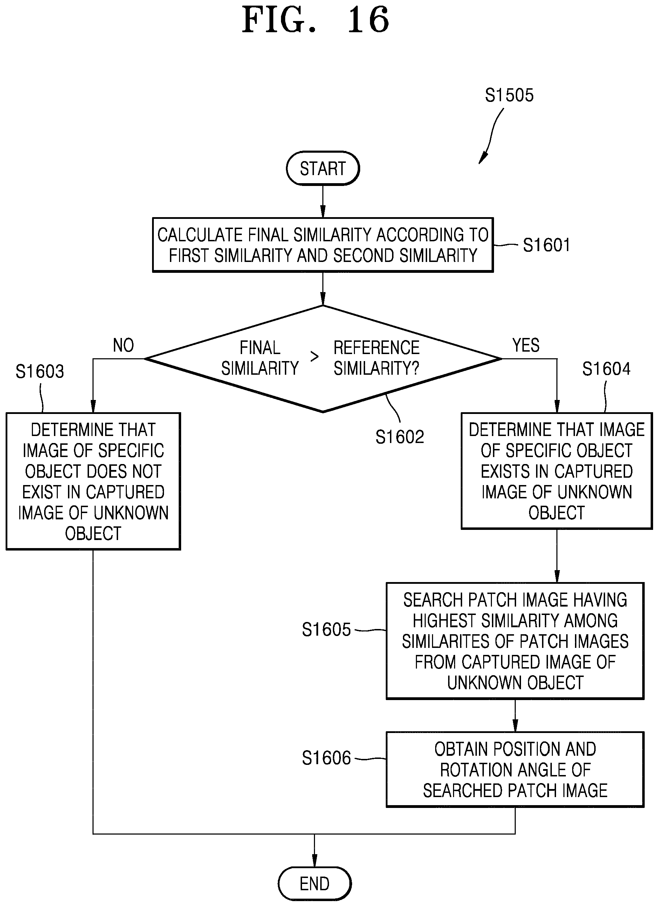

FIG. 16 shows a detailed operation of Operation S1505 in FIG. 15.

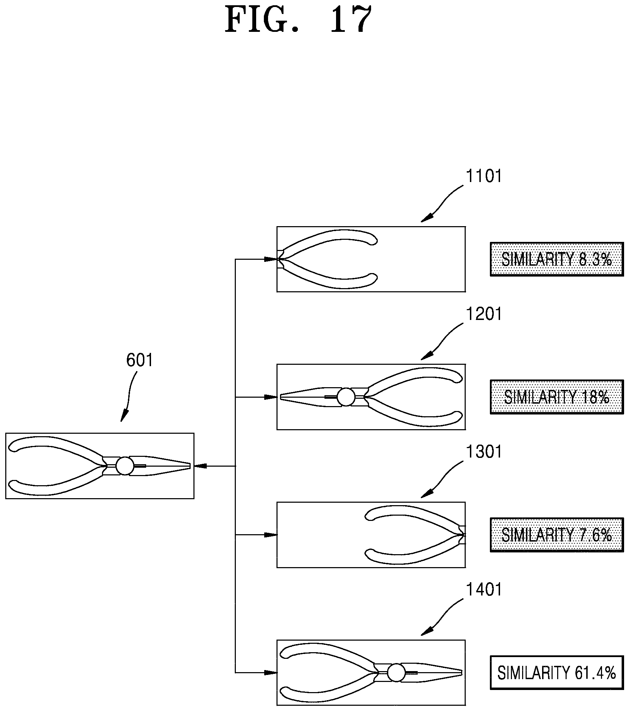

FIG. 17 is a view showing an example of the similarity of each of the patch images 1101 to 1401 of FIGS. 11 to 14 with respect to the extracted image 601 of FIG. 6.

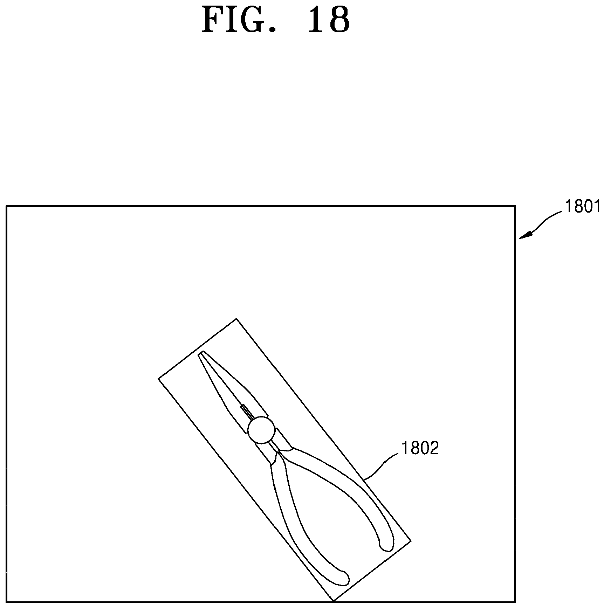

FIG. 18 is a view showing a patch image 1802 searched by Operation S1605 of FIG. 16.

The detailed operation of determination Operation S807 in FIG. 8 will be described with reference to FIGS. 15 to 18.

In Operation S1501, the control device 103 may obtain first similarity that is the similarity of the shape of the outline (see 1002 of FIG. 10) of an unknown object with respect to the shape of the outline (see 702 of FIG. 7) of the specific object. In the case of the present embodiment, the first similarity may be obtained by the similarity of reference Fourier descriptors and target Fourier descriptors. The reference Fourier descriptors which are obtained by Operation S303 of FIG. 3 may be Fourier descriptors with respect to the shape of the outline (see 702 of FIG. 7) of the specific object. The target Fourier descriptors which are obtained by Operation S803 of FIG. 8, are Fourier descriptors with respect to the shape of the outline (see 1002 of FIG. 10) of the unknown object.

Next, the control device 103 may obtain the similarity of each of the patch images (see 1101 to 1401) with respect to the extracted image 601 of the specific object, thereby obtaining second similarity that is the highest similarity among similarities of the patch images 1101 to 1401 in Operation S1503. In the case of the present embodiment, since the similarity of a fourth patch image 1401 is 61.4% that is highest, the second similarity may be 61.4% (see FIG. 17).

The control device 103 may determine whether an image of the specific object exists in the captured image of the unknown object, by means of the first similarity and the second similarity in Operation S1505. The detailed operation of Operation S1505 will be described as below.

The control device 103 may calculate the final similarity according to the first similarity and the second similarity in Operation S1601. For example, the average of the first similarity and the second similarity may be the final similarity. However, the final similarity may be determined in various ways according to unique characteristics of the robot system. For example, a higher weight may also be assigned to a higher similarity among the first similarity and the second similarity.

Next, the control device 103 may compare the final similarity with reference similarity in Operation S1602.

When the final similarity is not higher than the reference similarity, the control device 103 may determine that an image of the specific object does not exist in the captured image of the unknown object in Operation S1603.

When the final similarity is higher than the reference similarity, the control device 103 may perform Operations S1604 to S1606.

In Operation S1604, the control device 103 may determine that an image of the specific object exists in the captured image of the unknown object.

Next, the control device 103 may search the patch image 1401 having the highest similarity among the similarities of the patch images 1101 to 1401 from the captured image of the unknown object in Operation S1605. In FIG. 18, reference numerals 1801 and 1802 represent a patch-image searching screen and a searched patch image, respectively.

The control device 103 may obtain the position and the rotation angle of the searched patch image 1802 in Operation S1606.

As described above, in the object detection method according to the present embodiment and the robot system employing the same, it may be determined whether an image of the specific object exists in the captured image of the unknown object, by means of the first similarity that is the similarity of the shape of the outline of the unknown object with respect to the shape of the outline of the specific object and the second similarity that is the similarity of each of the patch images with respect to the extracted image of the specific object. Thus, the following effects may be obtained.

Firstly, the first similarity that is the similarity of the shape of the outline may be obtained by well-known shape descriptors, for example, Fourier descriptors. Thus, the first similarity may be obtained for a relatively short time, and the object detection may be robust to changes in ambient illuminance and a material of the specific object.

Secondly, since the first similarity that is the similarity of the shape of the outline and the second similarity that may be referred to as the similarity inside an object, are applied together to determination criteria, the accuracy of object detection is increased, and the object detection may be robust to changes in ambient illuminance and a material of the specific object.

Thirdly, since patch images including a region of the outline of the unknown object are obtained by means of the reference position information on the specific object, the number of the patch images may be minimized. Thus, the second similarity may be obtained for a relatively short time.

In conclusion, in the object detection method according to the present embodiment and a robot system employing the same, an object detection time may be effectively reduced, the accuracy of object detection may be increased, and the object detection may be robust to changes in ambient illuminance and a material of the specific object.

So far, the present disclosure has been focused on example embodiments. Those skilled in the art to which the present disclosure pertains will understand that the present disclosure can be implemented in a modified form without departing from the essential characteristics of the present disclosure. Therefore, the disclosed embodiments should be considered in terms of explanation, not limitation. The scope of the present disclosure is shown in the claims rather than the above description, and the invention claimed by the claims and the inventions equivalent to the claimed invention should be interpreted as being included in the present disclosure.

### INDUSTRIAL APPLICABILITY

The present disclosure may be used in various object detection devices other than robots.

## Claims

1. An object detection method, whereby a control device of a robot determines whether an image of a specific object exists in a captured image of an unknown object from a camera of the robot, the object detection method comprising:
(a1) obtaining an extracted image and an outline of a specific object from a captured image of the specific object;
(a2) obtaining reference position information, which is information on an angle and a distance of each point of the outline with respect to a center position of the specific object, from the extracted image of the specific object;
(b1) detecting the outline of an unknown object from a captured image of the unknown object;
(b2) obtaining patch images including a region of the outline of the unknown object, by means of the reference position information; and
(b3) determining whether an image of the specific object exists in the captured image of the unknown object, by means of similarity of a shape of the outline of the unknown object with respect to a shape of the outline of the specific object and of similarity of each of the patch images with respect to the extracted image of the specific object.

2. The object detection method of claim 1, wherein information on the extracted image of the specific object and the outline of the specific object obtained in (a1) and the reference position information obtained in (a2) are registered and used in the control device of the robot.

3. The object detection method of claim 1, wherein (a1) comprises:
(a1-1) obtaining a captured image of the specific object by means of a camera of the robot;
(a1-2) obtaining a difference image in which a background image is distinguished from an image of the specific object, from the captured image of the specific object;
(a1-3) obtaining an extracted image of the specific object from the difference image;
(a1-4) performing noise removal processing on the difference image; and
(a1-5) detecting an outline of the specific object from a difference image of a result obtained by performing noise removal processing.

4. The object detection method of claim 1, wherein (b1) comprises:
(b1-1) obtaining a difference image in which a background image is distinguished from an image of the unknown object, from the captured image of the unknown object;
(b1-2) performing noise removal processing on the difference image; and
(b1-3) detecting an outline of the unknown object from a difference image of a result obtained by performing noise removal processing.

5. The object detection method of claim 1, wherein the patch images obtained in (b2) comprise:
at least one extracted from the captured image of the unknown object; and
at least one image of a result obtained by rotation-moving the extracted at least one image.

6. The object detection method of claim 1, wherein (b3) comprises:
(b3a) obtaining first similarity that is similarity of a shape of an outline of the unknown object with respect to a shape of the outline of the specific object;
(b3b) obtaining second similarity that is highest similarity among similarities of the patch images by obtaining similarity of each of the patch images with respect to the extracted image of the specific object; and
(b3c) determining whether an image of the specific object exists in the captured image of the unknown object, by means of the first similarity and the second similarity.

7. The object detection method of claim 6, wherein
in (a1), reference Fourier descriptors which are Four descriptors with respect to the shape of the outline of the specific object are obtained,
in (b1), target Fourier descriptors which are Fourier descriptors with respect to the shape of the outline of the unknown object are obtained, and
in (b3a),
the first similarity is obtained by means of similarity of the reference Fourier descriptors and the target Fourier descriptors.

8. The object detection method of claim 7, wherein information on the extracted image of the specific object and the outline of the specific object and the reference Fourier descriptors, which are obtained in (a1), and the reference position information obtained in (a2) are registered and used in the control device of the robot.

9. The object detection method of claim 6, wherein (b3c) comprises:
calculating final similarity according to the first similarity and the second similarity;
determining whether an image of the specific object exists in a captured image of the unknown object, in a case where the final similarity is greater than reference similarity;
searching a patch image having highest similarity among similarities of the patch images from the captured image of the unknown object, in a case where it is determined that an image of the specific object exists in the captured image of the unknown object; and
obtaining a position and a rotation angle of the searched patch image.

10. A robot system in which a control device of a robot determines whether an image of a specific object exists in a captured image of an unknown object from a camera of the robot, wherein
the control device of the robot employs the object detection method of one of claims 1 through 9.
